# EUROPÄISCHE PATENTSCHRIFT

(11) **EP 1 303 691 B1**
(45) Veröffentlichungstag und Bekanntmachung des Hinweises auf die Patenterteilung: **14.12.2005**
(21) Anmeldenummer: 01947139.0
(22) Anmeldetag: 11.05.2001
(51) Int. Cl.: F02D 41/22, F02P 5/152, G01L 23/22

(54) **VERFAHREN UND VORRICHTUNG ZUR FEHLERERKENNUNG BZW. DIAGNOSE BEI EINEM KLOPFSENSOR**
METHOD AND DEVICE FOR ERROR DETECTION AND DIAGNOSIS IN A KNOCK SENSOR
PROCEDE ET DISPOSITIF DE DETECTION D'ERREUR ET DE DIAGNOSTIC POUR UN DETECTEUR DE CLIQUETIS

(30) Priorität: 11.07.2000 DE 10033586
(43) Veröffentlichungstag der Anmeldung: 23.04.2003
(73) Patentinhaber: ROBERT BOSCH GMBH, 70442 Stuttgart (DE)
(72) Erfinder: SAULER, Juergen, 70192 Stuttgart (DE); TORNO, Oskar, 71701 Schwieberdingen (DE); HEINSTEIN, Axel, 71229 Wimsheim (DE); KLUTH, Carsten, 70469 Stuttgart (DE); HAEMING, Werner, 74861 Neudenau (DE)
(86) Internationale Anmeldenummer: PCT/DE2001/001805
(87) Internationale Veröffentlichungsnummer: WO 2002/004800

(56) Entgegenhaltungen:
- WO-A-95/08760
- DE-A- 4 117 807

## Beschreibung

Die Erfindung geht aus von einem Verfahren und einer Vorrichtung zur Fehlererkennung bzw. Diagnose bei einem Klopfsensor bei einer mehrzylindrigen Brennkraftmaschine nach der Gattung des Hauptanspruchs.

### Stand der Technik

Es ist bekannt, daß für die Klopfregelung bei einer Brennkraftmaschine eine zuverlässige Klopferkennung durchgeführt werden muß, bei der sichergestellt wird, daß Fehlfunktionen eines Klopfsensors zuverlässig erkannt werden. Solche Klopfsensoren sind bspw. je einem Zylinder der Brennkraftmaschine zugeordnet. Sie geben ein Ausgangssignal ab, das erkennen läßt, ob in dem betreffenden Zylinder Klopfen aufgetreten ist oder nicht. Beim Klopfen handelt es sich um unerwünschte Verbrennungen, die vermieden werden sollten.

Ein Verfahren zur Klopferkennung und zur Fehlererkennung bei Klopfsensoren ist beispielsweise aus der Druckschrift WO-A-9508760 bekannt. Bei diesem bekannten Verfahren werden aus den Ausgangssignalen der Klopfsensoren, die beispielsweise Körperschallsensoren sind, drehzahlabhängige normierte Referenzpegel gebildet. In Abhängigkeit von den normierten Referenzpegeln werden drehzahlabhängige Referenzpegelschwellen gebildet, wobei jeweils eine drehzahlabhängige obere Referenzpegelschwelle und eine drehzahlabhängige untere Referenzpegelschwelle in einem Speicher des Steuergerätes der Brennkraftmaschine als Kennlinie abgelegt ist. Die Referenzpegel werden so gebildet, daß sie der Lautstärke der Brennkraftmaschine im klopffreien Betrieb entsprechen. Dabei werden die Referenzpegel mit Hilfe einer Integration der Ausgangssignale der Klopfsensoren bestimmt, wobei die Ermittlung der Referenzpegel bei solchen Bedingungen durchgeführt wird, bei denen kein Klopfen auftritt, beispielsweise innerhalb eines vorgebbaren Meßfensters.

Zur eigentlichen Fehlererkennung wird beim bekannten Verfahren jeder aktuelle normierte Referenzwert mit den beiden drehzahlabhängigen Referenzpegelschwellen verglichen. Bei einer vorgebbaren Abweichung des aktuellen normierten Referenzpegels wird auf eine Fehlfunktion erkannt. Dabei wird beispielsweise bei Unterschreiten des unteren Referenzpegelschwellwertes auf ein Abfallen des Klopfsensors erkannt, so daß von diesem kein Signal zur Auswerteeinrichtung gelangen kann. Bei einem Überschreiten des oberen Schwellwertes wird ebenfalls eine Fehlfunktion des Sensors angenommen und es werden dann jeweils Ersatzmaßnahmen ergriffen.

Um einen Sicherheitsabstand zum hohen Grundgeräuschpegel, der durch Rauschen, Einstrahlung in die Klopfsensorleitung usw. verursacht wird, einhalten zu können, wird die Diagnose erst ab einer gewissen Drehzahlschwelle durchgeführt, bei der der Abstand des normierten Referenzpegels zum Grundgeräusch so groß ist, daß eine zuverlässige Überprüfung durchgeführt werden kann.

### Vorteile der Erfindung

Das erfindungsgemäße Verfahren bzw. die erfindungsgemäße Vorrichtung zur Klopfsensordiagnose hat demgegenüber den Vorteil, daß die Drehzahlschwelle für die Durchführung der Diagnose gegenüber der bekannten Fehlererkennung herabgesetzt werden kann ohne dass die Zuverlässigkeit der Fehlererkennung darunter leidet. Damit kann in vorteilhafter Weise eine frühe Diagnose eines Klopfsensorfehlers bei kleinen Drehzahlen erfolgen und es kann damit auch ein früheres Ergreifen von Ersatzmaßnahmen durchgeführt werden um die Brennkraftmaschine zuverlässig vor Beschädigungen zu schützen.

Erzielt werden diese Vorteile mit einem Verfahren bzw. einer Vorrichtung zur Fehlererkennung bzw. Diagnose mit den Merkmalen der beiden unabhängigen Ansprüche. Dabei wird von einer Brennkraftmaschine ausgegangen, die nur einen Klopfsensor aufweist, der an einer vorgebbaren Stelle der Brennkraftmaschine bzw. des Motorblocks angeordnet ist. Es können auch mehrere Klopfsensoren vorhanden sein, wobei dann jedem Klopfsensor sichere Zylinder zugeordnet sind. Zur Fehlererkennung bzw. Diagnose wird jeweils nur das Signal des lautesten Zylinders verwendet, d.h. das Signal des Zylinders, das am Ort des Klopfsensors am lautesten ist. Die Festlegung des betreffenden Zylinders erfolgt bei der Applikation oder der Erstinbetriebnahme der Brennkraftmaschine, wobei die Erkennung des lautesten Zylinders Vorteilhafterweise über eine Maximalwertauswahl oder durch Vergleich der für die einzelnen Zylinder erhaltenen Referenzpegel erfolgt.

Weitere Vorteile der Erfindung werden durch die in den Unteransprüchen angegebenen Maßnahmen erzielt. Dabei wird die Fehlererkennung bzw. Diagnose in vorteilhafter Weise mittels eines Vergleichs des aktuellen Referenzpegels des lautesten Zylinders mit einer oberen und einer unteren Referenzpegelschwelle durchgeführt. Die Referenzpegelschwellen werden Vorteilhafterweise ebenfalls in Abhängigkeit vom Referenzpegel des lautesten Zylinders gebildet und sind außerdem drehzahlabhängig. Die Maximalwertauswahl bei der Applikation erfolgt in vorteilhafter Weise durch Betätigung eines Umschaltmittels. Für die Klopfregelung werden weiterhin alle Zylinder berücksichtigt.

### Zeichnung

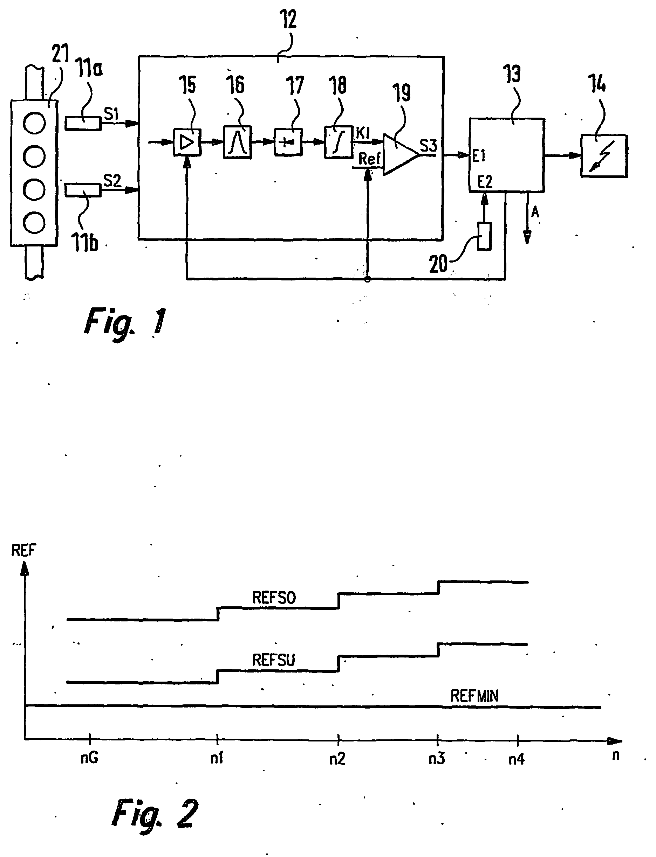

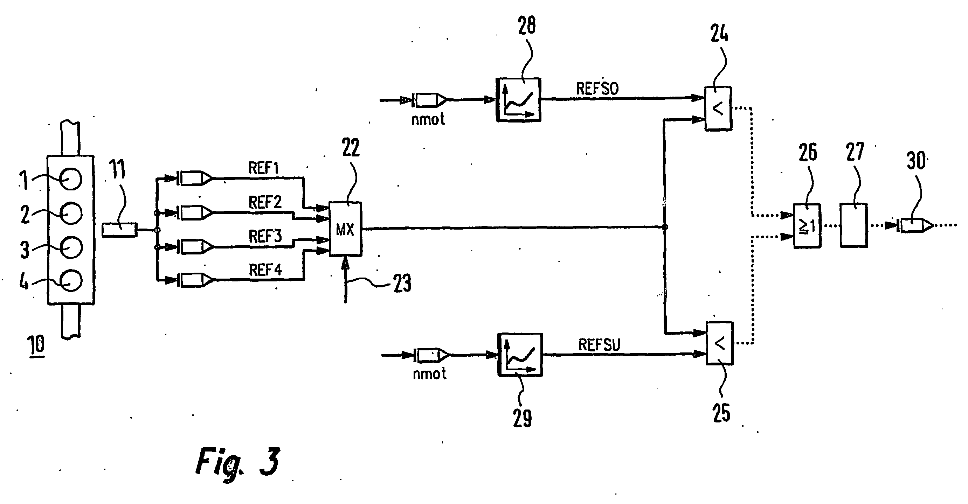

Ein Ausführungsbeispiel der Erfindung ist in der Zeichnung dargestellt und wird in der nachfolgenden Beschreibung näher erläutert. Im einzelnen zeigt Figur 1 eine bekannte Vorrichtung zur Klopferkennung die mit der Ergänzung nach Figur 3 auch geeignet ist, das vorliegende erfindungsgemäße Verfahren durchzuführen. In Figur 2 sind obere und untere Referenzpegelschwellen beispielhaft über der Drehzahl aufgetragen. In Figur 3 ist eine erfindungsgemäße Vorrichtung zur Klopfsensordiagnose bzw. Klopfsensorfehlererkennung durch Auswertung der Geräusche des Zylinders, der am Ort des Klopfsensor die lautesten Geräusche erzeugt und damit das höchste Ausgangssignal des Klopfsensors verursacht, dargestellt.

### Beschreibung

In Figur 1 ist eine aus der Druckschrift WO-A-95 08760 bekannte Vorrichtung zur Klopferkennung bei einer Brennkraftmaschine dargestellt. Eine solche Vorrichtung ist mit entsprechender Ergänzung auch in der Lage, das erfindungsgemäße Verfahren zur Fehlererkennung bzw.

Klopfsensordiagnose durchzuführen und bei erkannter Fehlfunktion Ersatzmaßnahmen einzuleiten.

Bei der in Figur 1 dargestellten Vorrichtung zur Klopferkennung sind der nur schematisch dargestellten Brennkraftmaschine 10 zwei Klopfsensoren 11a und 11b zugeordnet, die an vorgebbaren Stellen der Brennkraftmaschine angeordnet sind. Die Klopfsensoren 11a und 11b liefern die Signale S1 und S2 an eine Auswerteschaltung 12, die über einen Eingang E1 mit einem Mikroprozessor bzw. Rechner 13 verbunden ist. Der Rechner ist Bestandteil eines nicht näher dargestellten Steuergerätes der Brennkraftmaschine. Dem Rechner 13 können über einen weiteren Eingang E2 zusätzliche Signale, beispielsweise ein Drehzahlsignal n zugeführt werden. Der Rechner 13 steuert in Abhängigkeit von den zugeführten Signalen beispielsweise die Zündungsendstufen 14 der Brennkraftmaschine und/oder weitere Einrichtungen wie Einspritzventile usw. der Brennkraftmaschine an, beispielsweise durch Abgabe geeigneter Signale am Ausgang A. Die gesamte Auswerteschaltung kann auch komplett im Rechner 13 des Steuergerätes der Brennkraftmaschine integriert sein.

Die Auswerteschaltung 12 umfaßt im Ausführungsbeispiel wenigstens einen Verstärker 15 mit einstellbarem Verstärkungsfaktor, dem über einen Multiplexer 21 abwechslungsweise die von den Klopfsensoren 11a und 11b gelieferten Ausgangssignale S1 und S2 zugeführt werden können. In einem nachfolgenden Bandpaß 16 sowie einer Demodulationsschaltung 17, beispielsweise einem Gleichrichter werden die Signale weiterverarbeitet und schließlich im Integrator 18 aufintegriert. Die integrierten Signale bzw. der sich einstellende Integratorwert wird mit KI bezeichnet. Der Integratorwert KI wird in einem Komparator 19 mit einem Referenzpegel verglichen, das Vergleichsergebnis läßt Klopfen erkennen, wenn der Wert KI den Referenzpegel Ref um vorgebbare Werte überschreitet.

Der Komparator 19 oder weitere, in Figur 1 nicht dargestellte Vergleichsmittel, denen auch die Signale KI und Ref zugeführt werden, werden auch zur Fehlererkennung bzw. Diagnose verwendet. Dazu wird jeweils der aktuelle Referenzpegel oder ein aus diesem gebildeter aktueller normierter Referenzpegel mit einer oberen und einer unteren Referenzpegelschwelle verglichen und es wird auf Fehler erkannt, wenn dieser Vergleich ergibt, dass ein aktueller Referenzpegel die obere Referenzpegelschwelle überschreitet oder die untere Referenzpegelschwelle unterschreitet. Die beiden Referenzpegelschwellen sind drehzahlabhängige Kennlinien, wobei die Referenzpegelschwellen mit steigender Drehzahl ansteigen, da auch das von den Zylindern gelieferte Geräusch mit steigender Drehzahl anwächst.

Zur Erhöhung der Zuverlässigkeit wird für die Fehlererkennung zusätzlich die Erfüllung der Bedingung verlangt, dass die Überschreitung des oberen oder die Unterschreitung des unteren Referenzpegelschwellwert für eine applizierbaren Zeitdauer erfüllt sein muß.

Um einen Sicherheitsabstand zu dem Grundgeräuschpegel einhalten zu können, darf die Fehlererkennung bzw. Diagnose erst oberhalb einer gewissen Mindestdrehzahl nG durchgeführt werden, bei der der Abstand des Grundgeräusches zur Referenzpegelschwelle groß genug ist. Ein solcher minimaler Referenzpegel Refmin setzt also eine Mindestdrehzahl nG voraus.

Ein Beispiel für den Verlauf einer oberen und einer unteren Referenzpegelschwelle über der Drehzahl n sowie ein minimaler Referenzpegel sind in Figur 2 dargestellt.

Die Bildung der Referenzpegel aus dem Ausgangssignal eines Klopfsensors und die Festlegung der Referenzpegelschwellen aus vorhergehenden Referenzpegeln wird in der Druckschrift PCT DE 94/01041 genauer beschrieben und soll daher hier nicht mehr ausführlich erläutert werden.

Bei Brennkraftmaschinen mit nur einem Klopfsensor sind die Unterschiede der Referenzpegel, die zylinderspezifisch ermittelt werden, teilweise sehr groß. Die Lautstärkeunterschiede zwischen den innen- und außenliegenden Zylindern sind beträchtlich und führen dazu, dass für jeden Zylinder unterschiedliche Referenzpegel erhalten werden. Die Lautstärkeunterschiede resultieren aus den verschiedenen Abständen der einzelnen Zylinder vom Montageort des Klopfsensors sowie durch unterschiedliche Übertragungswege des Körperschalls. Beispielsweise können Wasser- oder Ölkanäle im Motorblock bzw. im Block der Brennkraftmaschine die Übertragung des Körperschalls beeinträchtigen. Generell können auch die in verschiedenen Zylindern erzeugten Geräusche unterschiedlich sein. Durch die erfindungsgemäße Beschränkung der Diagnose auf den oder die lautesten Zylinder bzw. auf das zylinderspezifisch lauteste registrierte Geräusch wird der Abstand zwischen dem Grundgeräuschpegel, der konstant ist und der unteren Referenzpegelschwelle REFMIN erhöht. Dadurch kann die Diagnose schon bei kleineren Drehzahlen als beim bekannten System durchgeführt werden und es wird eine frühere Diagnose eines Klopfsensorfehlers ermöglicht, dies bedeutet gleichzeitig, daß früher Ersatzmaßnahmen ergriffen werden können, um die Brennkraftmaschine vor einer Beschädigung zu schützen.

Die Auswahl des lautesten Zylinders bzw. des lautesten zylinderspezifischen Geräuschs und damit des höchsten Referenzpegels erfolgt bei der Applikation bzw. der ersten Inbetriebnahme der Brennkraftmaschine. Dazu werden die auftretenden Geräusche gemessen und das lauteste Geräusch, also das zum lautesten Zylinder gehörende Geräusch wird ausgewählt. Durch Vergleich der zylinderspezifischen Ausgangssignale des Klopfsensors miteinander kann somit bei der Applikation oder bei der Erstinbetriebnahme oder am Prüfstand der lautesten Zylinders erkannt werden. Eine solche Maximalwertauswahl kann auch anhand der zylinderspezifisch ermittelten Referenzwerte erfolgen.

Ausgehend von diesem Zylinder erfolgt dann künftig die Fehlererkennung bzw. Diagnose. Für die Klopferkennung werden jedoch weiterhin alle Zylinder berücksichtigt.

Im Ausführungsbeispiel nach Figur 3 ist der Brennkraftmaschine 10 mit den 4 Zylindern 1, 2, 3 und 4 ein einziger Klopfsensor 11 zugeordnet. Der Klopfsensor 11 gibt ein Ausgangssignal ab, das von den in den Zylindern auftretenden Geräuschen abhängt. Aus dem Ausgangssignal des Klopfsensors 11 werden zylinderspezifische Referenzpegel REF1 bis REF4 gebildet, wobei die Bildung der Referenzpegel entsprechend der in der PCT DE 94/01041 beschriebenen Methode erfolgt. Für die Fehlererkennung bzw. Diagnose wird über eine Maximalwertauswahl 22 lediglich ein Referenzpegel an zwei Vergleicher 24 und 25 weitergeleitet. Welcher Referenzwert weitergeleitet wird, kann beispielsweise bei der Applikation durch Betätigung eines Schalters der Maximalwertauswahl 22 bestimmt werden. Diese Betätigung wird durch den Pfeil 23 angedeutet.

In den Vergleichen 24, 25 wird der aktuelle Referenzwert des lautesten Zylinders jeweils mit der oberen Referenzpegelschwelle REFSO und/oder der unteren Referenzpegelschwelle REFSU verglichen. Die beiden Referenzpegelschwellen REFSO und/oder REFSU werden dabei drehzahlabhängig aus dem Referenzpegel des lautesten Zylinders gebildet, wobei beispielsweise auch vorhergehende Referenzpegel des selben Zylinders berücksichtigt werden. Die Referenzpegelschwellen werden beispielsweise in den Blöcken 28 und 29 in Abhängigkeit von der zugeführten Motordrehzahl nmot gebildet und einem elektronischen Speicher abgelegt.

Ergibt einer der beiden dieser Vergleiche, daß ein unerlaubter Wert des aktuellen Referenzpegels vorliegt, wird dem ODER-Gatter 26 ein entsprechendes high-Signal zugeführt, wodurch am Ausgang ein Fehlersignal entsteht. Das Fehlersignal kann in einer Fehleranzeige 30 angezeigt werden und/oder es können geeignete Maßnahmen zur Beeinflussung der Zündung usw. ausgelöst werden und damit die Brennkraftmaschine in einen sicheren Betriebszustand versetzt werden. Eine Zeitschaltung 27 kann die Fehleranzeige gegebenenfalls nur dann aktivieren, wenn der Fehler eine vorgebbare Zeit andauert.

Das Ausführungsbeispiel nach Figur 3 kann Bestandteil der Auswerteschaltung 12 oder des Rechners 13 des Steuergerätes der Brennkraftmaschine sein oder zusätzlich eingefügt werden. Gegebenenfalls können auch die zwei lautesten Zylinder ausgewählt werden.

Bei der Fehlererkennung kann gegebenenfalls zusätzlich ein Sicherheitsfaktor eingeführt werden, der eine Fehlererkennung erst dann erlaubt, wenn der aktuelle Referenzpegel des lautesten Zylinders die obere Referenzpegelschwelle multipliziert mit diesem Faktor überschreitet oder die untere Referenzpegelschwelle multipliziert mit einem solchen Sicherheitsfaktor unterschreitet.

## Patentansprüche

1. Verfahren zur Fehlererkennung bzw. Diagnose bei einem Klopfsensor, der den Zylindern einer mehrzylindrigen Brennkraftmaschine in vorgebbarer Weise zugeordnet ist und ein vom registrierten Geräusch abhängiges Ausgangssignal liefert, **dadurch gekennzeichnet, dass** die Fehlererkennung bzw. die Diagnose ausgehend von dem Zylinder oder den Zylindern mit der höchsten Geräuschentwicklung erfolgt oder ausgehend von dem oder den Zylinder(n) erfolgt, der/die am Klopfsensor das lauteste Geräusch liefert(n), wobei auf einen Fehler erkannt wird, wenn ein vom Geräusch abhängiger aktueller Wert wenigstens einen vorgebbaren oberen Schwellwert überschreitet oder einen vorgebbaren unteren Schwellwert unterschreitet.

2. Verfahren zur Fehlererkennung bzw. Diagnose nach Anspruch 1, **dadurch gekennzeichnet, dass** die Auswahl des lautesten Zylinders bei der ersten Inbetriebnahme der Brennkraftmaschine erfolgt.

3. Verfahren zur Fehlererkennung bzw. Diagnose nach Anspruch 1, **dadurch gekennzeichnet, dass** die Auswahl des lautesten Zylinders mittels Lautstärkemessung am Prüfstand oder durch Vergleich der von den einzelnen Zylindern abgegebenen Ausgangssignale oder daraus ermittelten Referenzwerten erfolgt.

4. Verfahren zur Fehlererkennung bzw. Diagnose nach Anspruch 1, 2, oder 3 **dadurch gekennzeichnet, dass** die Fehlererkennung anhand von Referenzpegeln durchgeführt wird, die aus vorgebbaren Ausgangsignalen des Klopfsensors gebildet werden und ein Fehler erkannt wird, wenn ein aktueller Referenzpegel eine obere oder untere Referenzpegelschwelle, in vorgebbarer Weise über- oder unterschreitet.

5. Verfahren zur Fehlererkennung bzw. Diagnose nach Anspruch 4, **dadurch gekennzeichnet, dass** die Referenzpegelschwellen aus vorherigen Referenzpegeln des lautesten Zylinders gebildet werden.

6. Verfahren zur Fehlererkennung bzw. Diagnose nach einem der vorhergehenden Ansprüche, **dadurch gekennzeichnet, dass** eine Fehlererkennung erst dann erfolgt, wenn eine obere Referenzpegelschwelle multipliziert mit wenigstens einem einen Sicherheitsbereich festlegenden vorgebbaren Faktor überschritten wird oder eine untere Referenzpegelschwelle multipliziert mit einem zweiten Faktor unterschritten wird.

7. Verfahren zur Fehlererkennung bzw. Diagnose nach einem der vorhergehenden Ansprüche, **dadurch gekennzeichnet, dass** nur auf einen Fehler erkannt wird, wenn die Fehlerbedingung länger als eine vorgebbare, applizierbare Zeit andauert.

8. Verfahren zur Fehlererkennung bzw. Diagnose nach einem der vorhergehenden Ansprüche, **dadurch gekennzeichnet, dass** Referenzpegelschwellen als drehzahlabhängige Kennlinien in einem elektronische Speicher abgelegt werden.

9. Verfahren zur Fehlererkennung bzw. Diagnose nach einem der vorhergehenden Ansprüche, **dadurch gekennzeichnet**, das bei erkanntem Fehler Ersatzmaßnahmen zum sicheren Betrieb der Brennkraftmaschine und/oder eine Anzeige eingeleitet werden.

10. Vorrichtung zur Fehlererkennung bzw. Diagnose bei einem Klopfsensor, der den Zylindern einer mehrzylindrigen Brennkraftmaschine in vorgebbarer Weise zugeordnet ist und ein vom registrierten Geräusch abhängiges Ausgangssignal liefert, **dadurch gekennzeichnet, dass** die Vorrichtung wenigstens Mittel zur Maximalwerterkennung umfaßt, die nur Signale, die vom Zylinder mit der höchsten Geräuschentwicklung stammen oder Signale des Zylinders, der am Klopfsensor das lauteste Geräusch liefert, zur Fehlererkennung weiterleiten.

11. Vorrichtung zur Fehlererkennung bzw. Diagnose bei einem Klopfsensor, der den Zylindern einer mehrzylindrigen Brennkraftmaschine in vorgebbarer Weise zugeordnet ist, **dadurch gekennzeichnet, dass** sie zur Durchführung wenigstens eines der Verfahrens nach einem der Ansprüche 1 bis 9 verwendet wird.

## Claims

1. Method for detecting faults and/or performing diagnostics on a knock sensor which is assigned to the cylinders of a multi-cylinder internal combustion engine in a predefinable fashion and supplies an output signal which is dependent on the registered noise, **characterized in that** the fault detection and/or the diagnostics are carried out on the basis of the cylinder or the cylinders with the greatest development of noise or on the basis of the cylinder or cylinders supplying the loudest noise at the knock sensor, wherein a fault is detected if a current value which is dependent on the noise exceeds at least one predefinable upper threshold value or drops below a predefinable lower threshold value.

2. Method for detecting faults and/or performing diagnostics according to Claim 1, **characterized in that** the loudest cylinder is selected when the internal combustion engine is first put into operation.

3. Method for detecting faults and/or performing diagnostics according to Claim 1, **characterized in that** the loudest cylinder is selected by measuring the sound volume on a test rig or by comparing the output signals emitted by the individual cylinders or reference values determined therefrom.

4. Method for detecting faults and/or performing diagnostics according to Claim 1, 2 or 3, **characterized in that** fault detection is carried out on the basis of reference levels which are formed from predefinable output signals of the knock sensor, and a fault is detected if a current reference level exceeds or drops below an upper or lower reference level threshold in a predefinable fashion.

5. Method for detecting faults and/or performing diagnostics according to Claim 4, **characterized in that** the reference level thresholds are formed from previous reference levels of the loudest cylinder.

6. Method for detecting faults and/or performing diagnostics according to one of the preceding claims, **characterized in that** fault detection is not carried out until an upper reference level threshold multiplied by at least one predefinable factor defining a safety range is exceeded or a lower reference level threshold multiplied by a second factor is undershot.

7. Method for detecting faults and/or performing diagnostics according to one of the preceding claims, **characterized in that** a fault is detected only if the fault condition lasts for longer than a predefinable applicable time.

8. Method for detecting faults and/or performing diagnostics according to one of the preceding claims, **characterized in that** reference level thresholds are stored as rotational-speed-dependent characteristic curves in an electronic memory.

9. Method for detecting faults and/or performing diagnostics according to one of the preceding claims, **characterized in that**, when a fault is detected, substitute measures are initiated in order to operate the internal combustion engine and/or to display reliably.

10. Device for detecting faults and/or performing diagnostics on a knock sensor which is assigned to the cylinders of a multi-cylinder internal combustion engine in a predefinable fashion and supplies an output signal which is dependent on the registered noise, **characterized in that** the device comprises at least means for maximum value detection, which means pass on for fault detection only signals which originate from the cylinder with the greatest degree of development of noise or signals of the cylinder which supplies the loudest noise at the knock sensor.

11. Device for detecting faults and/or performing diagnostics on a knocking sensor which is assigned to the cylinders of a multi-cylinder internal combustion engine in a predefinable fashion, **characterized in that** said device is used for carrying out at least one of the methods according to one of Claims 1 to 9.

## Revendications

1. Procédé d'identification des erreurs ou de diagnostic dans le cas d'un capteur de cliquetis qui est associé de façon prédéfinie aux cylindres d'un moteur à combustion interne à plusieurs cylindres et qui fournit un signal de sortie en fonction du bruit enregistré,
**caractérisé en ce que**
l'identification d'erreur ou le diagnostic a lieu à partir du ou des cylindres qui émettent le plus de bruit ou à partir du ou des cylindres qui fournissent au capteur de cliquetis le bruit le plus fort, une erreur étant identifiée si une valeur momentanée qui dépend du bruit dépasse une valeur seuil supérieure prédéfinie ou n'atteint pas une valeur seuil inférieure prédéfinie.

2. Procédé d'identification des erreurs ou de diagnostic selon la revendication 1,
**caractérisé en ce que**
le cylindre le plus bruyant est sélectionné lorsque le moteur à combustion interne est mis en service pour la première fois.

3. Procédé d'identification des erreurs ou de diagnostic selon la revendication 1,
**caractérisé en ce que**
le cylindre le plus bruyant est sélectionné en mesurant l'intensité sonore sur le banc d'essai ou en comparant les signaux de sortie émis par chacun des cylindres ou des valeurs de référence déterminées à partir d'eux.

4. Procédé d'identification des erreurs ou de diagnostic selon la revendication 1, 2 ou 3,
**caractérisé en ce que**
les erreurs sont identifiées à l'aide de niveaux de référence constitués à partir de signaux de sortie prédéfinissables du capteur de cliquetis et une erreur est identifiée quand un niveau momentané de référence dépasse ou n'atteint pas d'une manière prédéfinie un seuil supérieur ou inférieur de niveau de référence.

5. Procédé d'identification des erreurs ou de diagnostic selon la revendication 4,
**caractérisé en ce que**
les seuils de niveau de référence sont formés à partir de niveaux de référence précédents du cylindre le plus bruyant.

6. Procédé d'identification des erreurs ou de diagnostic selon l'une des revendications précédentes,
**caractérisé en ce que**
les erreurs sont identifiées uniquement quand on dépasse un seuil supérieur de niveau de référence multiplié par au moins un facteur prédéfinissable qui détermine un domaine de sécurité ou quand on n'atteint pas un seuil inférieur de niveau de référence multiplié par un deuxième facteur.

7. Procédé d'identification des erreurs ou de diagnostic selon l'une des revendications précédentes,
**caractérisé en ce qu'**
une erreur est uniquement identifiée quand la condition d'erreur dure plus longtemps qu'un temps prédéfini et applicable.

8. Procédé d'identification des erreurs ou de diagnostic selon l'une des revendications précédentes,
**caractérisé en ce que**
les seuils de niveau de référence sont enregistrés dans une mémoire électronique sous forme de courbes caractéristiques qui dépendent de la vitesse de rotation.

9. Procédé d'identification des erreurs ou de diagnostic selon l'une des revendications précédentes,
**caractérisé en ce que**
lorsqu'une erreur est identifiée, des mesures de remplacement sont prises pour que le moteur à combustion interne ait un fonctionnement sûr et/ ou un affichage a lieu.

10. Dispositif d'identification des erreurs ou de diagnostic dans le cas d'un capteur de cliquetis qui est associé de façon prédéfinie aux cylindres d'un moteur à combustion interne à plusieurs cylindres et qui fournit un signal de sortie en fonction du bruit enregistré,
**caractérisé en ce que**
le dispositif comprend au moins des moyens, destinés à reconnaître la valeur maximale, qui pour identifier une erreur ne transmettent que les signaux provenant du cylindre qui émet le plus de bruit ou les signaux du cylindre qui fournit le bruit le plus fort au capteur de cliquetis.

11. Dispositif d'identification des erreurs ou de diagnostic dans le cas d'un capteur de cliquetis associé de façon prédéfinie aux cylindres d'un moteur à combustion interne à plusieurs cylindres,
**caractérisé en ce qu'**
il est utilisé pour exécuter au moins un des procédés d'après l'une des revendications 1 à 9.
